Europäisches Patentamt

European Patent Office

Office européen des brevets

(11) Veröffentlichungsnummer: **0 460 417 A1**

(12) **EUROPÄISCHE PATENTANMELDUNG**

(21) Anmeldenummer: 91107374.0

(22) Anmeldetag: 07.05.91

(51) Int. Cl.5: **G01B 7/30**, G01D 5/20, G01D 5/22

(30) Priorität: 07.06.90 DE 4018187

(43) Veröffentlichungstag der Anmeldung:
11.12.91 Patentblatt 91/50

(84) Benannte Vertragsstaaten:
DE ES FR GB

(71) Anmelder: **ROBERT BOSCH GmbH**
**Postfach 10 60 50**
**W-7000 Stuttgart 10(DE)**

(72) Erfinder: **Schenk, Rene, Dipl.-Ing. (FH)**
**Tübingerstrasse 56**
**W-7146 Tamm-Hohenstange(DE)**
Erfinder: **Fecht, Günther**
**Grünlandstrasse 3**
**W-7149 Freiberg(DE)**
Erfinder: **Schwendemann, Bernhard, Dr. Phys.**
**Rohrachweg 88**
**W-7060 Schorndorf(DE)**

(54) **Induktiver Winkelsensor zur Bestimmung der Drehung einer Welle.**

(57) Zur Bestimmung der Drehbewegung einer Lenksäule ist auf dieser ein Abgriffselement (12) drehfest befestigt, das topfförmig ausgebildet ist und radial versetzte Fortsätze (17, 18) aufweist. Diese Fortsätze (17, 18) haben einen gegensinnigen Konturenverlauf. Mit Hilfe eines induktiven Sensors (13) wird von dem Abgriffselement (12) durch Veränderung der Induktivität der Meßspulen (34, 35) ein Feinsignal erzeugt. Dieses Feinsignal wiederholt sich mehrmals bei der Drehbewegung der Lenksäule. Zur eindeutigen Zuordnung dieses Feinsignals wird mit Hilfe eines zweiten Sensors (44) und eines sich axial zur Lenksäule bewegenden Kurzschlußrings (40) ein Grobsignal erzeugt. Durch die rechnerische Verbindung des Grob- und des Feinsignals kann die genaue Winkelstellung der Lenksäule bestimmt werden. Der Winkelsensor (13) baut sehr kompakt und liefert relativ genaue Meßsignale.

FIG. 1

Stand der Technik

Die Erfindung geht aus von einem induktiven Winkelsensor zur Bestimmung der Drehung einer Welle nach der Gattung des Hauptanspruchs. Bei einem aus der DE-OS 28 36 001.1 bekannten Winkelsensor sind auf einer Welle zwei beliebig geformte Kurzschlußplatten angeordnet, die zwischen den Schenkeln eines E-förmigen Kerns bewegt werden. Dieser Winkelsensor baut aber relativ sperrig. Die Kurzschlußplatten sind auf eine Drehbewegung von 360° abgestimmt und liefern somit ein sich alle 360° wiederholendes Meßsignal. Da bei Lenkungen zwischen den maximalen Stellungen der Räder aber mehrere Umdrehungen der Lenksäule vorgesehen sind, ist eine genaue Zuordnung des Meßsignals zu einer bestimmten Umdrehung nur schwer möglich.

Vorteile der Erfindung

Der erfindungsgemäße induktive Winkelsensor mit den kennzeichnenden Merkmalen des Anspruchs 1 hat demgegenüber den Vorteil, daß der Sensor sehr klein und kompakt baut. Sein Zusammenbau und seine Befestigung an der Lenksäule sind in sehr einfacher Weise möglich.

Das Grob- und das Feinsignal werden nahezu an der gleichen Stelle ohne Zwischengestänge abgegriffen. Da keine zusätzlichen Übertragungselemente benötigt werden, ist zum Beispiel das Feinsignal spielfrei. Das die Drehbewegung an der Lenksäule mechanisch abgreifende Element betätigt sowohl den Grob- als auch den Feinsignalgeber. Über den gesamten Drehbereich der Lenksäule, nicht nur über einen Drehbereich von 360°, ist eine hohe Genauigkeit und Zuordnung der Meßsignale möglich. Durch die Trennung in ein Grob- und ein Feinsignal braucht das elektrische Signal nur mit mittlerer Auflösung erfaßt zu werden. Dadurch ist die Übertragung des Signals im Fahrzeug nicht besonders störempfindlich, und im Falle spannungsanaloger Signalausgabe ist der Einsatz von in Kraftfahrzeugen üblichen, preisgünstigen Analog-Digital-Wandlern möglich.

Durch die in den Unteransprüchen aufgeführten Maßnahmen sind vorteilhafte Weiterbildungen des im Anspruch 1 angegebenen Winkelsensors möglich.

Zeichnung

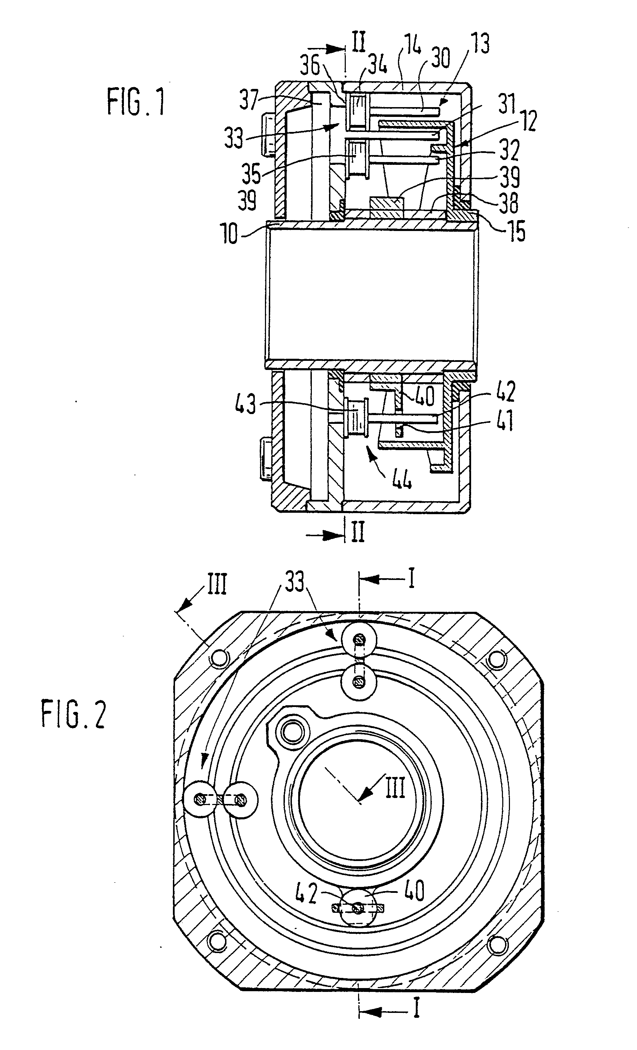

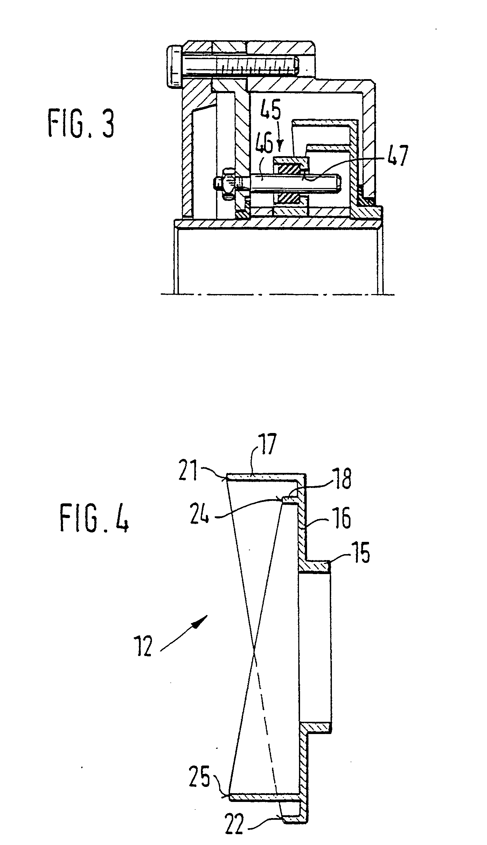

Ein Ausführungsbeispiel der Erfindung ist in der Zeichnung dargestellt und in der nachfolgenden Beschreibung näher erläutert. Es zeigen Figur 1 einen Schnitt durch einen an einer Lenksäule angeordneten Winkelsensor, wobei der Schnitt in Richtung I-I nach Figur 2 verläuft, Figur 2 einen Längsschnitt in Richtung II-II nach Figur 1, Figur 3 einen Teilschnitt durch eine Einzelheit in Richtung III-III nach Figur 2 und Figur 4 eine Darstellung einer Einzelheit.

Beschreibung des Ausführungsbeispiels

In Figur 1 ist mit 10 das Teil eines Sensorgehäuses bezeichnet, das auf die Lenksäule eines nicht näher dargestellten Kraftfahrzeugs geschoben ist. Zum Abgriff eines Meßsignals ist auf dem Teil 10 ein Abgriffselement 12 befestigt. Das Abgriffselement 12 ist Teil eines induktiven Winkelsensors 13, der in einem den Winkelsensor 13 umgreifenden Gehäuse 14 angeordnet ist. Mit Hilfe eines Flansches 15 ist das Abgriffselement 12 drehfest auf dem Teil 10 befestigt. Das Abgriffselement 12 ist ferner topfförmig ausgebildet, das heißt, auf einer Grundplatte 16 sind zwei unterschiedliche Radien aufweisende Fortsätze 17, 18 ausgebildet, die senkrecht zur Grundplatte 16 verlaufen. Wie aus der Figur 4 näher ersichtlich ist, ist der äußere Fortsatz 17 so ausgebildet, daß er an einer Stelle 21 seine maximale Länge und an der diametral gegenüberliegenden Seite, das heißt, um einen Winkelbereich von 180° verdreht, eine Stelle 22 mit der minimalsten Länge aufweist. Zwischen den beiden Stellen 21 bzw. 22 nimmt die Länge des Fortsatzes 17 kontinuierlich ab bzw. zu. Es ergeben sich so zwei spiegelbildlich gleiche Bereiche des Fortsatzes 17. Der Fortsatz 18 ist gegensinnig zum Fortsatz 17 ausgebildet, was bedeutet, daß sich seine Stelle 24 mit der minimalsten Länge im Bereich der Stelle 21 und seine Stelle 25 mit der maximalsten Länge im Bereich der Stelle 22 befindet. Die Stellen 21, 22, 24, 25 sind auf konzentrischen Kreisringen angeordnet. Somit ist dem Bereich des Fortsatzes 17 mit einem ansteigenden Kurvenverlauf ein Bereich des Fortsatzes 18 mit einem abnehmenden Kurvenverlauf zugeordnet.

Die Fortsätze 17, 18 ragen zwischen die Schenkel 30, 31, 32 eines E-förmigen Kerns 33 des induktiven Winkelgebers 13. Auf den beiden äußeren Schenkeln 30, 32 befindet sich je eine Meßspule 34, 35.

Wie aus der Figur 2 ersichtlich ist, sind im Gehäuse 14 zwei um 90° versetzte Kerne 33 angeordnet, die beide gleich ausgebildet sind. Die Kerne 33 sind auf einem als Gehäusetrennwand ausgebildeten Träger 36 befestigt, so daß die Kerne 33 ortsfest sind. Auf der den Kernen 33 abgewandten Seite des Trägers 36 ist eine nicht näher dargestellte Auswerteelektronik 37 für den Winkelsensor 13 angeordnet.

Zwischen dem Träger 36 und dem Flansch 15 des Abgriffselements 12 ist auf dem Teil 10 ein Gewinde 38 ausgebildet. Dieses Teil 10 ist drehfest auf der Lenksäule befestigt. Auf das Gewinde 38 ist eine Mutter 39 aufgeschraubt, an der sich an einer Stelle als Fortsatz ein Kurzschlußring 40 befindet. Durch die Öffnung 41 des Kurzschlußrings 40 ragt der mittlere Schenkel eines E-Kerns 42 mit einer Meßspule 43 eines zweiten Induktivsensors 44, der ebenfalls am Träger 36 ortsfest befestigt ist.

In der Figur 3 ist beispielhaft die Führung 45 des Kurzschlußrings 40 näher dargestellt. Hierzu ist am Träger 36 ein Zapfen 46 angeordnet, der in eine in der Mutter 39 ausgebildete Bohrung 47 ragt. Der Zapfen 46 gleitet dabei möglichst reibungsarm in der Bohrung 47.

Die Lenksäule und somit das Teil 10 und der Winkelsensor 13 führen dieselbe Drehbewegung aus. Dabei wird vom Induktivgeber 44 ein über den gesamten Drehbereich eindeutiges Meßsignal erzeugt. In der Ausgangsstellung, wie sie in der Figur 1 dargestellt ist, befindet sich der Kurzschlußring 40 etwa in der Mitte der Länge des Schenkels des E-Kerns 42 und kann in beide Drehrichtungen z. B. um ± 2 Umdrehungen der Lenksäule ausgelenkt werden. Dieser Drehbereich ist der normale, bei Lenkungen angestrebte Drehwinkel. Der Kurzschlußring 40 besteht in bekannter Weise aus unmagnetischem, aber aus elektrisch leitfähigem Material, z. B. Kupfer oder Aluminium. Die Spule 43 auf dem Kern 42 erzeugt ein magnetisches Wechselfeld. Der Kurzschlußring 40 stellt dabei eine Kurzschlußwindung dar, durch die das magnetische Wechselfeld nicht hindurchtreten kann. Der magnetische Gesamtfluß wird dadurch in guter Näherung proportional zur Stellung des Kurzschlußrings 40 begrenzt, so daß durch die Verschiebung des Kurzschlußrings auf dem Schenkel die Induktivität der Spule 43 geändert wird. Das vom Induktivgeber 44 erzeugte Meßsignal verläuft somit im optimalen Zustand von z. B. - 2 bis + 2 Umdrehungen der Lenksäule kontinuierlich linear. Dieses Signal wird gewöhnlich als Grobsignal bezeichnet, da mit ihm auf die jeweilige Stellung der Lenksäule innerhalb des Drehbereichs geschlossen werden kann.

Mit Hilfe der beiden Kerne 33 werden zwei sogenannte Feinsignale erzeugt, die sich über den gesamten Drehbereich von - 2 bis + 2 Umdrehungen mehrmals wiederholt. Dadurch wird eine Auflösung des gesamten Meßbereichs in mehrere Bereiche ermöglicht, um eine gute Genauigkeit des Meßsignals zu erreichen. Im folgenden wird die Meßsignalerzeugung nur mit Hilfe eines der beiden Kerne 33 erläutert. Werden die Fortsätze 17, 18 des Abgriffselements 12 während der Drehbewegung der Lenksäule 10 zwischen den Schenkeln 30, 31, 32 des Kerns 33 hindurchbewegt, und sind die Meßspulen 34, 35 von einem Wechselstrom durchflossen, so werden in den Fortsätzen 17, 18 Wirbelströme induziert. Dadurch wird das Magnetfeld der Meßspulen 34, 35 entsprechend der Form der Fortsätze 17, 18 in seiner Ausbreitung begrenzt und dadurch die Induktivität der Meßspulen 34, 35 verändert. Die Induktivität wird als Maß für die jeweilige Eintauchtiefe der Fortsätze 17, 18, das heißt, der ausgeführten Drehbewegung in einer nachgeschalteten, nicht dargestellten Elektronik ausgewertet. Durch die gegenläufig ausgebildete Form der beiden Fortsätze 17, 18 wird in den beiden Meßspulen 34, 35 ebenfalls ein gegensinniges Meßsignal erzeugt, wobei aber die betragsmäßige Änderung gleich ist. Dadurch kann in einer nachgeschalteten Elektronik eine differenzielle Auswertung des Meßsignals vorgenommen werden. Bei der differentiellen Auswertung ist es möglich, auftretende Meßfehler zu minimieren, die zum Beispiel durch Temperaturschwankungen auftreten oder durch axiale Schwankungen der Fortsätze zwischen den Schenkeln bewirkt werden. Ferner wird dadurch auch das Meßsignal verdoppelt. Der Signalverlauf ist dabei so, daß das Feinsignal bis zu einer Drehung von 180° ansteigt und anschließend mit negativer Steigung weiterläuft. Mit Hilfe des zweiten Kerns 32, der z. B. um 90° zum anderen Kern versetzt ist, wird ein zweites Feinsignal erzeugt. Durch diesen zweiten Kern 32 hindurch werden ebenfalls die Fortsätze 17, 18 bewegt, so daß man ein zweites Meßsignal erhält, das um z. B. 90° versetzt ist. Dieses zweite Meßsignal ist notwendig, um im Bereich der Stellen 21, 22, 24, 25 entstehende Totpunkte kompensieren zu können. Abhängig von der Breite der Stelle 21, 22, 24, 25 und der Breite der Kerne 33 erhält man in diesem Bereich keine genaue Spitze, sondern ein abgeflachtes Meßsignal. Mit Hilfe des zweiten Feinsignals ist somit eine Hilfsfunktion und eine Sicherheitsfunktion möglich, um diese Totpunkte überbrücken zu können. Aufgrund der rechnerischen Zuordnung der beiden Feinsignale und des Grobsignals ist somit eine genaue Bestimmung der Winkelstellung der Lenksäule möglich.

Die Ausbildung des Abgriffselements und somit der Verlauf des Feinsignals, ist nicht auf die in den Figuren 1 bis 4 dargestellte Form beschränkt. Mit dieser Ausbildung ist vielmehr ein dreieckiger Signalverlauf möglich, der sich bei einer Drehung um 360° zyklisch wiederholt. Durch Änderung der Länge der Fortsätze 17, 18 und durch eine beliebige Ausgestaltung der Stirnflächen der Fortsätze 17, 18 ist jeder beliebige Kurvenverlauf des Feinsignals möglich. Es kann zum Beispiel auch ein sägezahnförmiger Feinsignalverlauf realisiert werden oder ebenso einfach ist eine Linearisierung möglich.

## Patentansprüche

1. Induktiver Winkelsensor (13) zur Bestimmung der Drehung einer Welle, insbesondere der Lenksäule eines Kraftfahrzeugs, mit wenigstens einer auf wenigstens einem insbesondere E-förmigen Kern aus weichmagnetischem Material aufgebrachten Spule (34, 35) und einer zwischen den Schenkeln des Kerns (33) verschiebbaren, aus unmagnetischem elektrisch leitfähigem Material bestehenden Kurzschlußkörperanordnung, dadurch gekennzeichnet, daß zur Erzeugung eines ersten, den gesamten Drehbereich der Welle (10) abgreifenden Meßsignals ein Kurzschlußring (40) axial zur Welle (10) und relativ zu einem Kern (42) mit Meßspule (43) bewegt wird, und daß zur Erzeugung mindestens eines zweiten Meßsignals eine Kurzschlußkörperanordnung mindestens zwei jeweils topfförmig an einem Grundkörper (16) ausgebildete, zwischen die Schenkel (30, 31, 32) mindestens eines E-Kerns (33) ragenden Fortsätze (17, 18) aufweist, und daß die Fortsätze (17, 18) einen gegensinnigen Verlauf haben.

2. Winkelsensor nach Anspruch 1, dadurch gekennzeichnet, daß der Kurzschlußring (40) an einem Bauteil (39) befestigt ist, das in einer in der Welle (10) ausgebildeten, wendelförmig verlaufenden Bahn (38) gleitet.

3. Winkelsensor nach Anspruch 1 und/oder 2, dadurch gekennzeichnet, daß die Länge der Fortsätze (17, 18) kontinuierlich über einen Winkel von 360° abnimmt.

4. Winkelsensor nach Anspruch 1 und/oder 2, dadurch gekennzeichnet, daß die Länge der Fortsätze (17, 18) über einen Winkel von 180° kontinuerlich abnehmen und die beiden Fortsätze (17, 18) jeweils in sich spiegelbildlich ausgebildet sind.

5. Winkelsensor nach einem der Ansprüche 1 bis 4, dadurch gekennzeichnet, daß die beiden Fortsätze (17, 18) einen gegensinnigen Verlauf haben.

6. Winkelsensor nach einem der Ansprüche 1 bis 5, dadurch gekennzeichnet, daß auf den beiden äußeren Schenkeln (30, 32) des E-Kerns (33) mindestens je eine Spule (34, 35) angeordnet ist.

7. Winkelsensor nach einem der Ansprüche 1 bis 5, dadurch gekennzeichnet, daß auf dem mittleren Schenkel (31) des E-Kerns (33) mindestens eine Spule angeordnet ist.

8. Winkelsensor nach einem der Ansprüche 1 bis 7, dadurch gekennzeichnet, daß zwei E-förmige Kerne (33), die um z. B. 90° zueinander versetzt sind, ortsfest an einem Träger (26) angeordnet sind.

9. Winkelsensor nach einem der Ansprüche 1 bis 8, dadurch gekennzeichnet, daß der Kurzschlußring (40) mit Hilfe eines ortsfest angeordneten Führungszapfen (46) geführt ist.

FIG.1

FIG.2

FIG. 3

FIG. 4

Europäisches
Patentamt

**EUROPÄISCHER
RECHERCHENBERICHT**

Nummer der Anmeldung

**EP 91 10 7374**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | EP-A-0 386 439   (ROBERT BOSCH GMBH)<br>* das ganze Dokument *<br>— — — | 1-3,7 | G 01 B 7/30<br>G 01 D 5/20<br>G 01 D 5/22 |
| D,Y | DE-A-2 836 000   (ROBERT BOSCH GMBH)<br>* das ganze Dokument *<br>— — — | 1-3,7 | |
| A | GB-A-2 054 160   (ROBERT BOSCH GMBH)<br>* Seite 1, Zeile 112 - Seite 2, Zeile 8; Abbildung 2 *<br>— — — | 1,3,4,5,7 | |
| A | GB-A-2 067 847   (ROBERT BOSCH GMBH)<br>* Seite 1, Zeile 63 - Zeile 80; Abbildung 1 *<br>— — — | 1,7 | |
| A | US-A-3 949 339   (C.J.KENNEDY COMPANY)<br>* das ganze Dokument *<br>— — — — — | 1,3 | |

| RECHERCHIERTE SACHGEBIETE (Int. Cl.5) |
|---|
| G 01 B<br>G 01 D |

Der vorliegende Recherchenbericht wurde für alle Patentansprüche erstellt

| Recherchenort | Abschlußdatum der Recherche | Prüfer |
|---|---|---|
| Den Haag | 09 September 91 | BROCK T.J. |